# EUROPÄISCHE PATENTSCHRIFT

(11) **EP 4 477 519 B1**
(45) Veröffentlichungstag und Bekanntmachung des Hinweises auf die Patenterteilung: **18.02.2026**
(21) Anmeldenummer: 24181999.4
(22) Anmeldetag: 13.06.2024
(51) Int. Cl.: B62L 3/02

(54) **HYDRAULISCHE BREMSANORDNUNG FÜR EIN WENIGSTENS TEILWEISE MUSKELBETRIEBENES FAHRRAD**
HYDRAULIC BRAKE ASSEMBLY FOR A BICYCLE OPERATED AT LEAST PARTIALLY BY MUSCLE
ENSEMBLE FREIN HYDRAULIQUE POUR BICYCLETTE ENTRAÎNÉE AU MOINS PARTIELLEMENT PAR LA FORCE MUSCULAIRE

(30) Priorität: 15.06.2023 DE 102023115637; 09.08.2023 DE 102023121296
(43) Veröffentlichungstag der Anmeldung: 18.12.2024
(73) Patentinhaber: Trickstuff GmbH, 79292 Pfaffenweiler (DE)
(72) Erfinder: Liedler, Klaus, 79294 Sölden (DE)
(74) Vertreter: BSB Patentanwälte Schütte & Engelen Partnerschaft mbB

(56) Entgegenhaltungen:
- DE-B3- 102021 128 118

## Beschreibung

Die vorliegende Erfindung betrifft eine hydraulische Bremsanordnung für ein wenigstens teilweise muskelbetriebenes Fahrrad und umfasst wenigstens eine Gebereinheit, welche mit einer Nehmereinheit fluidisch verbindbar ist. Die Gebereinheit weist einen Bremshebel und ein Zylindergehäuse mit einem Zylinderraum und eine in dem Zylinderraum verschiebbar aufgenommene Kolbeneinheit und wenigstens eine Ausgleichsbehältereinrichtung mit einem Behälterraum für ein Hydraulikfluid auf. Die Kolbeneinheit und das Zylindergehäuse begrenzen einen Druckraum, welcher mittels wenigstens einer Ausgleichsbohrung mit dem Behälterraum verbunden ist.

Hydraulische Scheibenbremsen für Fahrräder bieten auch bei schnellen Fahrten und beispielsweise im Radsportbereich bei Rennrädern oder Mountainbikes ein sicheres Bremsen. Zudem können damit auch Elektrofahrräder oder Stadträder sicher gebremst werden. Aufgrund der hydraulischen Betätigung werden jedoch meist erhöhte Anforderungen an die Wartung solcher Bremsen bestellt. Das betrifft z. B. ein Nachfüllen des Hydraulikfluids und ein Entlüften des geschlossenen Hydraulikkreises. Luftblasen im Hydraulikkreis können die Funktion der Bremse erheblich beeinträchtigen und müssen daher beim Entlüften möglichst vollständig entfernt werden.

Bei der Entlüftung müssen sowohl der Druckraum und die anderen beim Bremsen unter Druck stehenden Räume (sog. Hochdruckbereich) als auch der Behälterraum bzw. die beim Bremsen nicht mit dem Bremsdruck beaufschlagten Räume (sog. Niederdruckbereich) entlüftet werden. In der Regel sind dazu sowohl im Hochdruckbereich als auch im Niederdruckbereich Entlüftungsöffnungen vorgesehen. Dadurch wird der Vorgang der Entlüftung insgesamt sehr komplex und zeitintensiv.

Um die Entlüftung etwas einfacher zu gestalten, wird im Stand der Technik vorgeschlagen, die Ausgleichsbohrung möglichst weit oben im Zylinderraum anzuordnen. Dann können die Luftblasen aus dem Hochdruckbereich in den Ausgleichsbehälter strömen, sofern die Ausgleichsbohrung nicht durch die Kolbeneinheit verschlossen ist. Durch anschließendes Entlüften des Ausgleichsbehälters können dann auch die Luftblasen aus dem Hochdruckbereich entfernt werden. Nachteilig ist allerdings, dass dazu der Zylinderraum in ganz bestimmten Positionen verlaufen muss, sodass der Aufbau der Gebereinheit insgesamt sehr beschränkt ist und besonders kompakte Umsetzungen kaum möglich sind.

Um die Entlüftung weiter zu vereinfachen, schlägt die DE 10 2021 128 118 B3 eine zusätzliche Fluidverbindung zwischen dem Druckraum und dem Behälterraum vor. Diese Fluidverbindung kann während des Normalbetriebs unterbrochen und in einer Schnellentlüftungsstellung temporär freigegeben werden.

Damit die Gebereinheit besonders kompakt ausgeführt werden kann, kann die Längsachse der Kolbeneinheit radial (z. B. nahezu rechtwinkelig) zur Längsachse des Lenkers angeordnet werden (sog. "Radialkolbenpumpen" bzw. "Radialkolbenbremsen"). Durch diese Bauart kann die Gebereinheit aber nicht in ihrer bestimmungsgemäßen Position am Lenker entlüftet werden. Sie muss vom Lenker teilweise gelöst und in eine ganz bestimmte Position verschwenkt werden. Diese Position hängt ganz stark von den konkreten Strömungswegen im Inneren der Gebereinheit ab. Dadurch sind selbst Fachleute meistens auf technische Anleitungen angewiesen, um eine sichere Entlüftung durchführen zu können.

Mit einer Vereinfachung der Entlüftung von Fahrradbremsen beschäftigt sich auch die DE 20 2006 020 544 U1. Es wird vorgeschlagen, die Ausgleichsbehältereinrichtung mit zwei Reservoiren auszustatten, welche beide im Niederdruckbereich liegen. Die Reservoire münden auf unterschiedlichen Höhen in einen gemeinsamen Kanal, welcher durch eine Entlüftungsschraube verschlossen ist. So können Luftblasen aus beiden Reservoiren durch Lösen der Entlüftungsschraube entfernt werden. Dazu muss die Gebereinheit um die Lenkerachse gedreht werden, bis eine Abdeckung der Ausgleichsbehältereinrichtung nach oben zeigt.

Demgegenüber ist es die Aufgabe der vorliegenden Erfindung, eine verbesserte hydraulische Bremsanordnung zur Verfügung zu stellen. Insbesondere soll eine besonders sichere und zuverlässige und zugleich einfache Entlüftung möglich sein.

Diese Aufgabe wird gelöst durch eine Bremsanordnung mit den Merkmalen des Anspruchs **1.** Ein erfindungsgemäßes Fahrrad ist Gegenstand des Anspruchs 15. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels.

Die erfindungsgemäße hydraulische Bremsanordnung ist für ein wenigstens teilweise muskelbetriebenes Fahrrad vorgesehen. Die Bremsanordnung umfasst wenigstens eine Gebereinheit, welche mit einer Nehmereinheit fluidisch (mittels einer Leitungseinrichtung) verbindbar ist. Die Bremsanordnung kann wenigstens eine Nehmereinheit umfassen. Die Bremsanordnung kann wenigstens eine Lenkeranbindung zur Montage der Gebereinheit an einem Lenker umfassen. Die Gebereinheit umfasst einen Bremshebel und ein Zylindergehäuse mit einem Zylinderraum. Die Gebereinheit umfasst eine in dem Zylinderraum (entlang einer Längsachse) verschiebbar aufgenommene Kolbeneinheit. Die Gebereinheit umfasst wenigstens eine Ausgleichsbehältereinrichtung mit wenigstens einem Behälterraum für ein Hydraulikfluid. Die Kolbeneinheit und das Zylindergehäuse begrenzen einen (mit der Nehmereinheit fluidisch verbindbaren) Druckraum. Der Druckraum ist mittels wenigstens einer Ausgleichsbohrung mit dem Behälterraum verbunden. Es ist wenigstens eine Entlüftungskanalanordnung vorgesehen. Die Entlüftungskanalanordnung verbindet eine Entlüftungsöffnung, welche in die Umgebung der Gebereinheit (bzw. ins Freie) mündet, sowohl mit einer Behälterraummündung als auch mit einer Druckraummündung. Dadurch können über die Entlüftungsöffnung sowohl der Behälterraum als auch der Druckraum zugleich entlüftet werden. Insbesondere mündet die Entlüftungskanalanordnung an der Druckraummündung in den Druckraum. Insbesondere mündet die Entlüftungskanalanordnung an der Behälterraummündung in den Behälterraum.

Insbesondere definiert die Lenkeranbindung eine Montageachse (für die Montage an dem Lenker). Insbesondere ist die Gebereinheit mittels der Lenkeranbindung um die Montageachse herum in einem (beliebigen) Drehwinkel (an dem Lenker) montierbar. Insbesondere ist der Bremshebel an einem hebelseitigen Ende der Gebereinheit und die Lenkeranbindung an einem lenkerseitigen Ende der Gebereinheit angeordnet.

Dabei ist bevorzugt, dass die Entlüftungskanalanordnung zwischen der Druckraummündung und der Entlüftungsöffnung und zwischen der Behälterraummündung und der Entlüftungsöffnung (kontinuierlich) ansteigt bzw. (durchgehend) eine Steigung aufweist, sodass Luftblasen aus dem Druckraum und aus dem Behälterraum (durch Auftrieb) zu der Entlüftungsöffnung aufsteigen können. Das ist insbesondere dann gegeben, wenn die Gebereinheit so um die Montageachse gedreht ist, dass das hebelseitige Ende nach unten zeigt und/oder die Druckraummündung im Bereich des höchsten Punktes des Druckraums und/oder die Behälterraummündung im Bereich des höchsten Punktes des Behälterraums liegt. Insbesondere ist die Gebereinheit dann in einer bestimmungsgemäßen Montageposition.

Die erfindungsgemäße Bremsanordnung bietet viele Vorteile. Einen erheblichen Vorteil bietet die Entlüftungskanalanordnung. Dadurch können sowohl der Hochdruckbereich als auch der Niederdruckbereich gemeinsam bzw. zeitgleich über zum Beispiel nur eine einzige Entlüftungsöffnung entlüftet werden. Dabei kann die Entlüftungskanalanordnung auch bei Gebereinheiten in der Bauart einer Radialkolbenpumpe vorteilhaft eingesetzt werden. Insgesamt ermöglicht die Erfindung eine besonders komfortable und zugleich sichere Entlüftung von Hochdruckbereich und Niederdruckbereich, welche auch von ungeübten Benutzern zuverlässig durchgeführt werden kann. Besonders vorteilhaft ist, dass die im Niederdrucksystem und auch im Hochdrucksystem vorhandenen Luftblasen nach dem Öffnen der Entlüftungsöffnung einfach auftriebsbedingt ins Freie entweichen können.

Insbesondere ist die Gebereinheit so um die Montageachse gedreht, dass die Entlüftungsöffnung den höchsten Punkt der Entlüftungskanalanordnung bereitstellt. Insbesondere ist die Gebereinheit so um die Montageachse gedreht, dass die Entlüftungsöffnung höher als die Druckraummündung und die Behälterraummündung angeordnet ist.

Vorzugsweise können die Luftblasen aus dem Druckraum und aus dem Behälterraum wenigstens dann zu der Entlüftungsöffnung aufsteigen, wenn die Gebereinheit in einem Winkel zwischen 0° und 90° zur Horizontalen um die Montageachse gedreht ist. Insbesondere zeigt das hebelseitige Ende dabei nach unten. Insbesondere ist die Gebereinheit dabei in einem Winkel von maximal 75° oder maximal 60° oder maximal 55° zur Horizontalen nach unten geneigt. Möglich ist auch, dass die Gebereinheit dabei in einem Winkel von maximal 50° oder maximal 45° zur Horizontalen nach unten geneigt ist. Insbesondere ist die Gebereinheit dabei in einem Winkel von wenigstens 5° oder wenigstens 7° oder wenigstens 10° oder wenigstens 15° oder wenigstens 20° zur Horizontalen nach unten geneigt.

Solche Winkel entsprechen den im Mountainbikesport erprobten Montagepositionen für Gebereinheiten und ermöglichen eine ergonomische Betätigung der Bremshebel. Daher ist es besonders vorteilhaft, wenn die Luftblasen in solchen Montagepositionen zu der Entlüftungsöffnung aufsteigen können. Denn so können der Behälterraum und der Druckraum direkt in der Montageposition der Gebereinheit gleichzeitig entlüftet werden. Ein Lösen und Verdrehen der Gebereinheit am Lenker ist dadurch zum Entlüften nicht mehr notwendig. Wenn die Gebereinheit in einem solchen Winkel zur Horizontalen um die Montageachse gedreht ist, liegt insbesondere eine bestimmungsgemäße Montageposition vor. Die Angaben zum Drehwinkel der Gebereinheit relativ zur Montageachse beziehen sich insbesondere auf eine Hauptebene der Gebereinheit und/oder auf eine Längsachse der Kolbeneinheit und/oder des Zylindergehäuses.

Insbesondere ist die Kolbeneinheit entlang einer Längsachse verschiebbar im Zylinderraum aufgenommenen. Insbesondere erstreckt sich die Kolbeneinheit in Bezug auf ihre Längsachse zwischen dem hebelseitigen Ende und dem lenkerseitigen Ende. Insbesondere ist die Kolbeneinheit durch das Betätigen des Bremshebels vom hebelseitigen Ende in Richtung des lenkerseitigen Endes verschiebbar. Insbesondere wird die Kolbeneinheit beim Betätigen des Bremshebels auf das lenkerseitige Ende und insbesondere auf die Lenkeranbindung (und somit auch auf den Lenker) zubewegt.

Eine solche Ausgestaltung entspricht insbesondere der Bauart einer Radialkolbenpumpe. Der Winkel zwischen der Längsachse der Kolbeneinheit und der Horizontalen entspricht insbesondere auch dem Winkel, um welchen die Gebereinheit zur Horizontalen um die Montageachse gedreht ist. In der bestimmungsgemäßen Montageposition ist die Längsachse der Kolbeneinheit vorzugsweise mit dem hebelseitigen Ende nach unten geneigt

Vorzugsweise mündet die Entlüftungskanalanordnung im Bereich des höchsten Punktes des Druckraums und insbesondere am höchsten Punkt des Druckraums in den Druckraum. Insbesondere mündet die Entlüftungskanalanordnung derart in den Druckraum, dass Luftblasen (auftriebsbedingt) aus dem Druckraum in die Entlüftungskanalanordnung aufsteigen können. Vorzugsweise mündet die Entlüftungskanalanordnung wenigstens im obersten Viertel oder Achtel des Druckraums in den Druckraum.

Vorzugsweise mündet die Entlüftungskanalanordnung im Bereich des höchsten Punktes des Behälterraums und insbesondere am höchsten Punkt des Behälterraums in den Behälterraum. Insbesondere mündet die Entlüftungskanalanordnung derart in den Behälterraum, dass Luftblasen (auftriebsbedingt) aus dem Behälterraum in die Entlüftungskanalanordnung aufsteigen können. Vorzugsweise mündet die Entlüftungskanalanordnung wenigstens im obersten Viertel oder Achtel des Behälterraums in den Behälterraum.

Das hat den besonderen Vorteil, dass Luftblasen aus dem Behälterraum und dem Druckraum auftriebsbedingt zur Entlüftungsöffnung aufsteigen können, wenn die Gebereinheit betriebsbereit am Lenker montiert ist. Zum Entlüften muss dann z. B. nichts weiter getan werden, als die Entlüftungsöffnung zu öffnen.

Die im Rahmen der vorliegenden Erfindung gemachten Angaben zu den höchsten Punkten und zur Ausrichtung der Entlüftungskanalanordnung beziehen sich insbesondere auf eine bestimmungsgemäße Montageposition der Gebereinheit an einem Lenker eines Fahrrads. Eine bestimmungsgemäße Montageposition liegt insbesondere wenigstens dann vor, wenn die Längsachse des Druckraums und/oder des Behälterraums und/oder der Kolbeneinheit und/oder eines Seitenkanals der Entlüftungskanalanordnung waagerecht verlaufen und/oder wenn die Längsachse eines Hauptkanals der Entlüftungskanalanordnung vertikal verläuft. Vorzugsweise liegt die bestimmungsgemäße Montageposition auch dann vor, wenn solche Längsachsen in einem bestimmten Winkelbereich von der Waagerechten bzw. von der Vertikalen abweichen. Solche Winkelbereiche werden nachfolgend definiert. Besonders bevorzugt ist dabei eine Montageposition, bei der die die Längsachse des Druckraums und/oder des Behälterraums und/oder der Kolbeneinheit schräg nach unten geneigt ist. Der Druckraum und der Behälterraum sind insbesondere so zueinander angeordnet, dass ihr jeweiliger höchster Punkt an der zugehörigen Mündung der Entlüftungskanalanordnung liegt, wenn die Gebereinheit in der bestimmungsgemäßen Montageposition ist. Im Rahmen der vorliegenden Erfindung kann der höchste Punkt auch Teil einer höchsten Linie oder höchsten Fläche sein.

Insbesondere ist die Entlüftungskanalanordnung wenigstens abschnittsweise mittels eines lösbaren Verschlusselements verschließbar. Vorzugsweise ist das Verschlusselement so in die Entlüftungskanalanordnung einbringbar, dass der Druckraum gegenüber dem Behälterraum und auch gegenüber der Entlüftungsöffnung (bzw. der Umgebung) abgedichtet ist und dass vorzugsweise auch der Behälterraum gegenüber der Umgebung abgedichtet ist. Im Rahmen der vorliegenden Erfindung beziehen sich Angaben zu Dichtheit insbesondere auf die im bestimmungsgemäßen Betrieb der Gebereinheit zu erwartenden Druckbedingungen. Insbesondere dichtet das Verschlusselement die Entlüftungsöffnung gegenüber der Umgebung ab.

In einer vorteilhaften Ausgestaltung ist vorgesehen, dass durch ein Lösen des Verschlusselements der Druckraum mit dem Behälterraum verbunden wird und dass dabei vorzugsweise auch die Entlüftungsöffnung geöffnet wird. Insbesondere wird zunächst der Druckraum mit dem Behälterraum verbunden. Anschließend oder zeitgleich wird insbesondere die Entlüftungsöffnung geöffnet und/oder es werden der Druckraum und der Behälterraum mit der Umgebung verbunden. Insbesondere umfasst das Lösen ein wenigstens teilweises Herausnehmen (Herausschrauben) des Verschlusselements aus der Entlüftungskanalanordnung.

Das Verschlusselement ist vorzugsweise als eine Schraube ausgebildet oder umfasst wenigstens eine solche. Insbesondere ist das Verschlusselement einstückig ausgebildet. Insbesondere weist das Verschlusselement wenigstens abschnittsweise ein Außengewinde auf, welches mit einem Innengewinde der Entlüftungskanalanordnung korrespondiert.

In einer vorteilhaften Weiterbildung ist das Verschlusselement mit einem in axialer Richtung verlaufenden Sackloch ausgestattet. Insbesondere mündet das Sackloch an einem oberen Ende des Verschlusselements in die Umgebung. Insbesondere ist das Sackloch mittels einer Sacklochverschlussschraube gegenüber der Umgebung (nach außen) verschließbar. Die Sacklochverschlussschraube weist an ihrem oberen Ende vorzugsweise wenigstens ein Dichtungsmittel auf.

Insbesondere ist die Sacklochverschlussschraube an einem oberen Ende in das Verschlusselement einschraubbar. Insbesondere sind das Verschlusselement und die Sacklochverschlussschraube koaxial zueinander angeordnet. Insbesondere verlaufen der Hauptkanal und das Sackloch koaxial zueinander. Insbesondere weist das Verschlusselement im Bereich des Sacklochs ein Innengewinde auf, welches mit einem Außengewinde der Sacklochverschlussschraube korrespondiert. Insbesondere ist der Kragenabschnitt zum Ansetzen eines Schraubwerkzeugs ausgebildet. Insbesondere weist die Sacklochverschlussschraube einen Ansatz zum Ansetzen eines Schraubwerkzeugs auf.

Insbesondere ist das Verschlusselement mit einem in radialer Richtung verlaufenden Querkanal ausgestattet. Insbesondere verläuft der Querkanal von dem Sackloch aus nach radial außen (bis zu einer Außenseite des Verschlusselements). Insbesondere mündet der Querkanal (an einer Außenseite des Verschlusselements) in die Entlüftungskanalanordnung und vorzugsweise in den Hauptkanal (wenn das Verschlusselement bestimmungsgemäß in die Entlüftungskanalanordnung eingesetzt ist). Insbesondere mündet der Querkanal unterhalb des Gewindeabschnitts und/oder oberhalb der Dichtfläche des Verschlusselements.

Insbesondere stehen das Sackloch und insbesondere auch der Querkanal nicht in Strömungsverbindung mit dem Druckraum, wenn das Verschlusselement bestimmungsgemäß in die Entlüftungskanalanordnung eingesetzt ist. Insbesondere stehen das Sackloch und insbesondere auch der Querkanal in Strömungsverbindung mit dem Behälterraum und/oder dem Seitenkanal, wenn das Verschlusselement bestimmungsgemäß in die Entlüftungskanalanordnung eingesetzt ist. Insbesondere dichtet die Sacklochverschlussschraube das Sackloch gegenüber der Umgebung **ab.** Insbesondere dichtet die Sacklochverschlussschraube dadurch auch den Behälterraum (und den Seitenkanal und den Querkanal) gegenüber der Umgebung ab.

Die zuvor beschriebene Weiterbildung hat den Vorteil, dass bei bestimmungsgemäß eingesetztem Verschlusselement nur die Sacklochverschlussschraube gelöst werden muss, um den Behälterraum zu entlüften oder mit Hydraulikfluid zu befüllen. Der Druckraum bleibt dabei weiterhin abgedichtet. So ist einerseits die vorteilhafte "gleichzeitige Entlüftung" von Druckraum und Behälterraum möglich und andererseits kann bei Bedarf auch nur der Behälterraum entlüftet bzw. befüllt werden.

Die Bremsanordnung kann wenigstens einen rohrartigen Befülladapter mit zwei Enden umfassen. Insbesondere ist der Befülladapter mit einem ersten Ende anstelle des Verschlusselements in die Entlüftungskanalanordnung (vorzugsweise in den Hauptkanal) einschraubbar. Dabei dichtet das erste Ende vorzugsweise den Druckraum ab (wenn es bestimmungsgemäß eingeschraubt ist). Insbesondere korrespondiert das erste Ende mit dem Dichtsitz. Insbesondere weist der Befülladapter ein Sackloch auf, welches an einem zweiten Ende mündet. Insbesondere weist der Befülladapter wenigstens einen radial verlaufenden Füllkanal auf, welcher sich vom Sackloch aus nach radial außen erstreckt. Insbesondere ist das zweite Ende des Befülladapters mit einem Schlauch und/oder Behälter zum Zuführen von Hydraulikfluid verbindbar. Insbesondere ist das zweite Ende über das Sackloch und den Füllkanal mit dem Behälterraum strömungsverbunden, wenn der Befülladapter bestimmungsgemäß eingeschraubt ist. Dadurch kann der Behälterraum mit Hydraulikfluid befüllt und bei Bedarf auch zugleich entlüftet werden, während der Druckraum verschlossen bleibt.

Es ist vorteilhaft und bevorzugt, dass die Entlüftungskanalanordnung wenigstens zwei Kanalarme umfasst. Insbesondere mündet wenigstens ein (erster) Kanalarm in den Druckraum. Insbesondere mündet wenigstens ein (zweiter) Kanalarm in den Behälterraum. Insbesondere mündet wenigstens einer der Kanalarme, insbesondere der erste Kanalarm, an der Entlüftungsöffnung in die Umgebung der Gebereinheit. Insbesondere mündet wenigstens einer der Kanalarme, insbesondere der zweite Kanalarm, in den wenigstens einen anderen Kanalarm, insbesondere in den ersten Kanalarm. Möglich ist auch, dass wenigstens zwei Kanalarme, insbesondere der erste und der zweite Kanalarm, an der Entlüftungsöffnung in die Umgebung münden. Es ist auch möglich, dass der erste Kanalarm in den zweiten Kanalarm mündet. Dann mündet vorzugsweise wenigstens der zweite Kanalarm an der Entlüftungsöffnung in die Umgebung.

In einer vorteilhaften und bevorzugten Ausgestaltung umfasst die Entlüftungskanalanordnung wenigstens einen Hauptkanal und wenigstens einen Seitenkanal. Insbesondere verläuft der Hauptkanal von dem Druckraum zu der Entlüftungsöffnung. Insbesondere erstreckt sich der Seitenkanal von dem Hauptkanal aus zu dem Behälterraum. Möglich ist auch, dass der Hauptkanal von dem Behälterraum aus zu der Entlüftungsöffnung verläuft und dass der Seitenkanal sich von dem Hauptkanal aus zu den Druckraum erstreckt. Vorzugsweise zweigt der Seitenkanal von dem Hauptkanal ab. Vorzugsweise verbindet der Seitenkanal den Behälterraum mit dem Hauptkanal. Insbesondere weist der Seitenkanal einen kleineren Kanalquerschnitt als der Hauptkanal auf. Insbesondere zweigt der Seitenkanal zwischen der Entlüftungsöffnung und dem Druckraum von dem Hauptkanal ab.

In einer vorteilhaften Ausgestaltung verläuft der Hauptkanal steiler als der Seitenkanal. Insbesondere verläuft der Hauptkanal in einem Winkel zwischen 0° und 65° oder zwischen 0° und 45° und vorzugsweise zwischen 0° und 35° (25°) zur Vertikalen. Insbesondere verläuft der Seitenkanal in einem Winkel zwischen 0° und 65° oder zwischen 0° und 45° und vorzugsweise zwischen 0° und 35° (25°) zur Horizontalen nach oben oder unten in Richtung Hauptkanal bzw. Entlüftungsöffnung. Der Seitenkanal verläuft insbesondere quer und zum Beispiel rechtwinkelig (90° +/- 25° oder 90° +/- 15°) zum Hauptkanal. Der Seitenkanal verläuft insbesondere vom Behälterraum aus schräg nach oben zum Hauptkanal. Der Seitenkanal kann parallel zur Längsachse der Kolbeneinheit und/oder des Druckraums verlaufen. Möglich ist, dass der Seitenkanal steiler als der Hauptkanal verläuft.

Insbesondere verläuft eine Längsachse des Hauptkanals in einem Winkel von 120° +/- 45° und vorzugsweise von 120° +/- 35° zu einer Längsachse der Kolbeneinheit und/oder des Druckraums und/oder des Behälterraums. Der Winkel kann beispielsweise 120° +/- 10° oder 90° +/- 10° betragen. Das ermöglicht eine besonders zuverlässige Entlüftung und erlaubt zugleich eine große Bandbreite an Montagepositionen, in denen optimal entlüftet werden kann. Beispielsweise kann mit solchen Ausführungen besonders gut entlüftet werden, wenn die Gebereinheit dabei um 25° +/- 15° zur Horizontalen nach unten geneigt am Lenker montiert ist (in Bezug auf die Längsachse der Kolbeneinheit bzw. auf eine Hauptebene der Gebereinheit).

Es ist vorteilhaft und bevorzugt, dass der Hauptkanal und/oder der Seitenkanal einen geradlinigen Verlauf aufweisen. Insbesondere sind der Hauptkanal und/oder der Seitenkanal mittels einer Bohrung oder eines vergleichbaren Verfahrens herstellbar bzw. hergestellt. Insbesondere weisen der Hauptkanal und/oder der Seitenkanal wenigstens abschnittsweise einen zylindrischen Kanalquerschnitt auf. Möglich ist auch eine andere Querschnittsgeometrie. Insbesondere umfasst der Hauptkanal zwei Kanalquerschnitte mit jeweils unterschiedlichen Durchmessern. Insbesondere ist der Hauptkanal abschnittsweise konisch ausgebildet (insbesondere im Bereich des Übergangs von dem einen zum anderen Kanalquerschnitt). Insbesondere wird dadurch die nachfolgend beschriebene Dichtfläche bereitgestellt.

In einer besonders bevorzugten und vorteilhaften Weiterbildung weist das Verschlusselement an einem unteren Ende, welches dem Druckraum oder dem Behälterraum zugewandt ist, eine Dichtfläche und vorzugsweise eine konische Dichtfläche auf. Insbesondere korrespondiert die Dichtfläche mit einem Dichtsitz. Insbesondere wird der Dichtsitz durch eine Querschnittsverengung im Hauptkanal bereitgestellt. Insbesondere ist der Dichtsitz Teil eines Gehäusekörpers, in welchem die Entlüftungskanalanordnung ausgebildet ist. Insbesondere ist der Dichtsitz konisch ausgebildet. Möglich sind auch andere geeignete Geometrien von Dichtfläche und/oder Dichtsitz sowie Dichtarten, z. B. Gummidichtungen, O-Ringe oder dergleichen.

Insbesondere liegt die Dichtfläche abdichtend am Dichtsitz an, sodass das Verschlusselement den Druckraum gegenüber dem Behälterraum abdichtet. Insbesondere wird der Druckraum nur durch die Dichtfläche und den Dichtsitz gegenüber der Entlüftungskanalanordnung abgedichtet. Insbesondere liegen der Dichtsitz und die Dichtfläche dadurch abdichtend aneinander an, dass das Verschlusselement bestimmungsgemäß in die Entlüftungskanalanordnung eingesetzt und vorzugsweise eingeschraubt ist. Insbesondere ist die Abdichtung zwischen Dichtsitz und Dichtfläche druckfest ausgebildet.

Das Verschlusselement weist vorzugsweise an einem oberen Ende, welches der Entlüftungsöffnung zugewandt ist, einen Kragenabschnitt auf. Insbesondere ist zwischen dem Kragenabschnitt und einem Gehäusekörper, in welchem die Entlüftungskanalanordnung ausgebildet ist, wenigstens ein Dichtkörper angeordnet. Insbesondere wird die Entlüftungskanalanordnung dadurch gegenüber der Umgebung abgedichtet. Insbesondere ist der Dichtkörper zwischen dem Verschlusselement und dem Gehäusekörper eingepresst, damit das eingesetzte (eingeschraubte) Verschlusselement den Behälterraum gegenüber der Entlüftungsöffnung bzw. der Umgebung abdichtet. Insbesondere ist der Dichtkörper als Dichtring ausgebildet. Insbesondere überragt der Kragenabschnitt die Entlüftungsöffnung in radialer Richtung. Insbesondere wird der Kragenabschnitt durch einen Schraubenkopf bereitgestellt.

Das Verschlusselement weist insbesondere wenigstens einen Gewindeabschnitt zum Einschrauben in die Entlüftungskanalanordnung und vorzugsweise in den Hauptkanal auf. Insbesondere ist der Gewindeabschnitt zwischen dem Seitenkanal und der Entlüftungsöffnung angeordnet. Insbesondere ist der Gewindeabschnitt nicht zwischen dem Seitenkanal und dem Druckraum angeordnet. Derartige Anordnungen des Gewindeabschnitts sind insbesondere dann vorgesehen, wenn das Verschlusselement in die Entlüftungskanalanordnung eingeschraubt ist (sodass der Druckraum gegenüber dem Behälterraum abgedichtet ist). So kann beim Einschrauben des Verschlusselements Hydraulikfluid (oder auch Luft) über den Seitenkanal in den Behälterraum entweichen. Grundsätzlich können Hydraulikfluid (oder auch Luft) aber vorzugsweise auch über die Ausgleichsbohrung in den Behälterraum entweichen.

Insbesondere weist der Hauptkanal einen mit dem Gewindeabschnitt korrespondierenden Innengewindeabschnitt auf. Insbesondere zweigt der Seitenkanal zwischen dem Dichtsitz und dem Innengewindeabschnitt von dem Hauptkanal ab. Insbesondere mündet der Seitenkanal außerhalb des Innengewindeabschnitts in den Hauptkanal. Insbesondere mündet der Seitenkanal unterhalb des Innengewindeabschnitts und oberhalb des Dichtsitzes in den Hauptkanal.

Insbesondere ist zwischen dem Verschlusselement und der Wandung des Hauptkanals, welche sich unterhalb des Seitenkanals und/oder unterhalb des Innengewindeabschnitts erstreckt, in radialer Richtung wenigstens abschnittsweise wenigstens ein Spalt ausgebildet (wenn das Verschlusselement eingesetzt ist). Insbesondere kann über den Spalt Hydraulikfluid aus dem Hauptkanal über den Seitenkanal in den Behälterraum entweichen, wenn das Verschlusselement eingesetzt wird.

Es ist bevorzugt und vorteilhaft, dass der gesamte Seitenkanal höher als ein höchster Punkt des Druckraums verläuft. Insbesondere verläuft auch der gesamte Hauptkanal höher als ein höchster Punkt des Druckraums. Insbesondere verläuft der Seitenkanal ausgehend von seiner Mündung in den Behälterraum wenigstens waagerecht oder mit einer Steigung nach oben zum Hauptkanal und/oder zur Entlüftungsöffnung. Insbesondere verlaufen weder der Seitenkanal noch der Hauptkanal abschnittsweise nach unten, sodass dort Luftblasen hängen bleiben könnten. Insbesondere verläuft der gesamte Seitenkanal höher als ein höchster Punkt des Behälterraums.

Es ist vorteilhaft und bevorzugt, dass eine Mündung des Seitenkanals in den Behälterraum und/oder eine Mündung des Seitenkanals in den Hauptkanal höher als eine Mündung des Hauptkanals in den Druckraum und insbesondere höher als ein höchster Punkt des Druckraums angeordnet sind. Es ist möglich, dass die Mündung des Seitenkanals in den Behälterraum tiefer oder auch höher als die Mündung des Seitenkanals in den Hauptkanal liegt. Möglich ist auch, dass die beiden Mündungen des Seitenkanals auf gleicher Höhe liegen. Der Verlauf des Seitenkanals hängt insbesondere auch von der Zugänglichkeit des Behälterraums im Rahmen der Herstellung des Seitenkanals ab. Beispielsweise muss genügend Platz vorhanden sein, um ein Zerspanungswerkzeug im Behälterraum mit dem gewünschten Winkel anzusetzen.

Das Verschlusselement ist vorzugsweise nur im Hauptkanal angeordnet, wenn es den Druckraum gegenüber dem Behälterraum und auch gegenüber der Entlüftungsöffnung und insbesondere auch den Behälterraum gegenüber der Entlüftungsöffnung abdichtet. Insbesondere kann das Verschlusselement nur im Hauptkanal angeordnet werden.

Vorzugsweise ist der Behälterraum wenigstens abschnittsweise oberhalb des Druckraums angeordnet. Insbesondere liegt der Behälterraum höher als der höchste Punkt des Druckraums. Möglich ist auch, dass der Behälterraum wenigstens abschnittsweise neben dem Druckraum angeordnet ist.

Insbesondere stellt die Entlüftungsöffnung einen höchsten Punkt der Entlüftungskanalanordnung und vorzugsweise des gesamten Hydraulikkreises dar. Insbesondere ist die Entlüftungsöffnung höher als ein höchster Punkt des Behälterraums und/oder als ein höchster Punkt des Druckraums angeordnet. Insbesondere liegt die Entlüftungsöffnung höher als der Seitenkanal. Insbesondere liegt das Verschlusselement höher als die Entlüftungsöffnung oder gleich hoch wie die Entlüftungsöffnung, wenn es bestimmungsgemäß in der Entlüftungskanalanordnung eingesetzt ist.

Die Bremsanordnung kann wenigstens einen Lenker umfassen. Insbesondere sind die Lenkeranbindung und die Kolbeneinheit so zueinander angeordnet, dass die Kolbeneinheit in Bezug auf ihre Längsachse radial vom Lenker (in Bezug auf die Längsachse des Lenkers) absteht, wenn die Gebereinheit in der bestimmungsgemäßen Montageposition ist. Dabei kann die Längsachse der Kolbeneinheit in einem Winkel von 90° zur Längsachse des Lenkers abstehen oder auch in einem Winkel kleiner als 90° zur Längsachse des Lenkers in Richtung des Lenkers abstehen. Insbesondere kann der Winkel 25° bis 90° oder 35° bis 90° oder 45° bis 90° betragen. Möglich sind auch Winkel von 50° bis 90°.

In solchen Anordnungen wird die Gebereinheit in Fahrradkreisen auch als Radialkolbenpumpe bezeichnet. In Kombination mit einer solchen Bauart kann die hier vorgestellte Erfindung besonders vorteilhaft zur Entlüftung eingesetzt werden. Insbesondere verläuft die Kolbeneinheit in Bezug auf ihre Längsachse nicht parallel zur Längsachse des Lenkers. Insbesondere verläuft die Längsachse der Kolbeneinheit in einem Winkel zwischen 45° und 90° zu einer Längsachse des Bremshebels. Insbesondere schneidet eine gedachte Verlängerung der Längsachse der Kolbeneinheit und/oder des Behälterraums den Bremshebel (insbesondere zwischen einem distalen Ende des Bremshebels und einer Bremshebelschwenkachse). Insbesondere wird die Kolbeneinheit bei der Betätigung des Bremshebels (im Wesentlichen) in die gleiche Richtung wie der Bremshebel bewegt. Insbesondere wird die Kolbeneinheit durch die Betätigung des Bremshebels in Richtung des Lenkers gedrückt.

In der bestimmungsgemäßen Montageposition ist die Längsachse der Kolbeneinheit und/oder des Druckraums vorzugsweise zur Horizontalen nach unten geneigt. Insbesondere ist die Längsachse der Kolbeneinheit und/oder des Druckraums zwischen 0° und 90° zur Horizontalen nach unten geneigt. Die Bremsanordnung kann in einer Weiterbildung wenigstens einen Lenker umfassen, an dem die Gebereinheit derart schräg nach unten montiert ist.

Insbesondere ist die Längsachse der Kolbeneinheit und/oder des Druckraums um maximal 75° oder maximal 60° zur Horizontalen nach unten geneigt. Möglich und bevorzugt ist, dass die Längsachse der Kolbeneinheit und/oder des Druckraums um maximal 45° oder maximal 35° oder maximal 30° zur Horizontalen nach unten geneigt ist. In der bestimmungsgemäßen Montageposition kann die Längsachse der Kolbeneinheit und/oder des Druckraums auch parallel zur Horizontalen sein. Solche Winkel ermöglichen eine besonders zuverlässige Entlüftung über die Entlüftungskanalanordnung.

In bestimmten Ausführungen kann die Längsachse der Kolbeneinheit und/oder des Druckraums in der bestimmungsgemäßen Montageposition zur Horizontalen nach oben geneigt sein. Dann sind der Druckraum und/oder der Behälterraum in Bezug auf ihren höchsten Punkt insbesondere entsprechend ausgebildet. Insbesondere ist die Längsachse der Kolbeneinheit um maximal 30° oder maximal 25° oder maximal 20° zur Horizontalen nach oben geneigt. Möglich ist auch eine Neigung von maximal 15° oder maximal 10° oder maximal 5° zur Horizontalen nach oben.

Insbesondere verläuft die Längsachse der Kolbeneinheit parallel zu einer Hauptebene der Gebereinheit. Insbesondere verläuft eine Längsachse des Bremshebels parallel zu einer Hauptebene der Gebereinheit. Insbesondere ist eine Hauptebene der Gebereinheit so zur Horizontalen geneigt, wie es zuvor für die Längsachse der Kolbeneinheit beschrieben wurde. In solchen Ausführungen kann der Begriff "Längsachse der Kolbeneinheit (und/oder des Druckraums)" synonym mit dem Begriff "Hauptebene der Gebereinheit" verwendet werden.

In der bestimmungsgemäßen Montageposition ist die Gebereinheit insbesondere bremsbereit bzw. einsatzfähig zum Bremsen des Fahrrads im Fahrbetrieb. Vorzugsweise befindet sich die Gebereinheit dabei auch in einer bestimmungsgemäßen Position zum Entlüften. Insbesondere entspricht die bestimmungsgemäße Montageposition zugleich auch der bestimmungsgemäßen Entlüftungspositionen. In der Entlüftungsposition können Luftblasen aus dem Druckraum und Luftblasen aus dem Behälterraum durch die Entlüftungskanalanordnung bis zur Entlüftungsöffnung aufsteigen. Dadurch kann die Gebereinheit in ihrer bestimmungsgemäßen Montagepositionen an dem Lenker entlüftet werden. Zum Entlüften muss sie nicht in eine andere, speziell für die Entlüftung vorgesehene Montageposition gebracht werden. Die Gebereinheit ist insbesondere zur Verwendung an einem geraden Lenker bzw. Mountainbike-Lenker ausgebildet und insbesondere nicht zur Verwendung an einem Rennradlenker vorgesehen.

Das erfindungsgemäße Fahrrad umfasst eine hydraulische Bremsanordnung, wie sie hier beschrieben ist. Insbesondere ist die wenigstens eine Gebereinheit in einer bestimmungsgemäßen Montageposition an einem Lenker des Fahrrads montiert. Insbesondere umfasst das Fahrrad wenigstens einen Lenker. Insbesondere entspricht die Montageachse einer Längsachse des Lenkers an der Stelle des Lenkers, an welcher die Gebereinheit montiert ist. Insbesondere ist das Fahrrad als ein Mountainbike ausgebildet. Insbesondere ist der Lenker ein sog. gerader Lenker und vorzugsweise ein Mountainbike-Lenker. Der Lenker kann als Flat Bar oder Rise Bar ausgebildet sein. Insbesondere ist der Lenker kein Rennrad-Lenker.

Insbesondere ist eine Anschlussöffnung zum Koppeln einer Leitungseinrichtung tiefer als die Entlüftungskanalanordnung angeordnet. Insbesondere dient die Anschlussöffnung zur Verbindung der Gebereinheit mit der Nehmereinheit. Insbesondere kommuniziert das Hydraulikfluid im Druckraum über die Anschlussöffnung mit dem Hydraulikfluid in der Leitungseinrichtung bzw. der Nehmereinheit. Insbesondere weist das Zylindergehäuse an einem nehmerseitigen Ende eine Anschlussöffnung zum Koppeln einer Leitungseinrichtung auf. Insbesondere kommuniziert das Hydraulikfluid im Druckraum über die Anschlussöffnung mit dem Hydraulikfluid in der Leitungseinrichtung bzw. der Nehmereinheit.

Insbesondere ist die Entlüftungskanalanordnung zwischen der Lenkeranbindung und dem Behälterraum und/oder dem Druckraum angeordnet. Insbesondere ist die Entlüftungskanalanordnung in einer Gehäusewandung ausgebildet, welche einstückig mit einem Teil der Lenkeranbindung und/oder mit dem Zylindergehäuse und/oder mit einer Wandung des Behälterraums ausgebildet ist. Insbesondere ist die Entlüftungskanalanordnung in einem Basiskörper der Gebereinheit ausgebildet. Insbesondere ist die Lenkeranbindung wenigstens teilweise einstückig mit dem Basiskörper ausgebildet. Der Basiskörper ist vorzugsweise einstückig ausgebildet. Insbesondere ist das Zylindergehäuse integraler Bestandteil des Basiskörpers. Insbesondere verläuft die Entlüftungskanalanordnung wenigstens teilweise und vorzugsweise vollständig im Basiskörper.

Insbesondere ist die Entlüftungsöffnung auch als eine Einfüllöffnung zum Einfüllen des Hydraulikfluids in den Behälterraum bzw. in den Hydraulikkreis ausgebildet (sog. Komfort-Entlüftung). Insbesondere kann ohne Entfernen der Membraneinheit entlüftet werden. Die Ausgleichsbehältereinrichtung kann aber auch wenigstens eine separate Einfüllöffnung zum Einfüllen des Hydraulikfluids in den Behälterraum aufweisen.

Insbesondere umfasst die Entlüftungskanalanordnung wenigstens drei Mündungen. Insbesondere liegt eine erste Mündung (Hochdruckmündung) im Bereich des höchsten Punktes des Druckraums. Insbesondere liegt eine zweite Mündung (Niederdruckmündung) im Bereich des höchsten Punktes des Behälterraums. Insbesondere liegt eine dritte Mündung an der Entlüftungsöffnung, sodass die Entlüftungskanalanordnung dort in die Umgebung der Gebereinheit bzw. ins Freie mündet.

Insbesondere stellt das Verschlusselement wenigstens zwei Dichtebenen bereit. Mit einer ersten Dichtebene dichtet das Verschlusselement insbesondere den Druckraum gegenüber dem Behälterraum und gegenüber der Entlüftungsöffnung bzw. gegenüber der Umgebung ab. Mit einer zweiten Dichtebene dichtet das Verschlusselement vorzugsweise die Entlüftungsöffnung bzw. die Entlüftungskanalanordnung zur Umgebung hinab. Insbesondere stellen die Dichtfläche und der Dichtsitz zusammen die erste Dichtebene bereit. Insbesondere stellen der Dichtkörper und der Kragenabschnitt und der Gehäusekörper zusammen die zweite Dichtebene bereit.

Insbesondere ist die Ausgleichsbohrung im Zylindergehäuse angeordnet. Insbesondere verbindet die Ausgleichsbohrung den Druckraum mit dem Behälterraum, wenn die Kolbeneinheit in einer Ruheposition ist bzw. wenn die Gebereinheit nicht betätigt wird. Bei einer Betätigung der Gebereinheit dichtet die Kolbeneinheit den Druckraum gegenüber dem Fluidraum insbesondere ab, sodass der Druckraum mit Druck beaufschlagbar ist. Mit anderen Worten, die Ausgleichsbohrung kann aufgrund einer Betätigung der Gebereinheit durch die Kolbeneinheit verschlossen werden. Eine anschließende weitere Bewegung der Kolbeneinheit führt insbesondere zu einem Druckaufbau im Druckraum und zu einer Verkleinerung des Volumens des Druckraums.

Insbesondere stellt der Druckraum einen Teil des Zylinderraums dar. Insbesondere herrscht beim Betätigen der Gebereinheit ein Bremsdruck im Druckraum. Der Druckraum gehört somit zum Hochdruckbereich des Hydraulikkreises. Beim Betätigen der Gebereinheit bzw. Bremsen herrscht im Behälterraum ein Niederdruck bzw. der atmosphärische Druck. Der Behälterraum gehört somit zum Niederdruckbereich des Hydraulikkreises. Die Betätigung der Gebereinheit erfolgt insbesondere durch ein (manuelles) Bewegen bzw. Betätigen des Bremshebels. Die Kolbeneinheit wird insbesondere durch Ziehen des Bremshebels in den Druckraum gedrückt. Insbesondere wird die Kolbeneinheit nicht in den Druckraum gezogen.

Die Ausgleichsbohrung kann eine oder mehrere Einzelbohrungen umfassen bzw. durch mehrere Einzelbohrungen bereitgestellt werden. Wenn im Rahmen der vorliegenden Erfindung von der Ausgleichsbohrung die Rede ist, sind dann insbesondere alle Einzelbohrungen gemeint. Die Ausgleichsbohrung kann auch als Schnüffelbohrung bezeichnet werden. Insbesondere wird unter der Ausgleichsbohrung bzw. einer Bohrung eine kanalartige Durchgangsöffnung verstanden, welche nicht zwangsläufig durch Bohren entstanden sein muss. Ein außerhalb des Druckraums liegender Teil des Zylinderraums kann mittels wenigstens einer Schmierbohrung mit dem Behälterraum verbunden sein. Insbesondere verlaufen die Ausgleichsbohrung und/oder die Schmierbohrung tiefer als die Mündung der Entlüftungskanalanordnung in den Behälterraum. Insbesondere liegt die Mündung der Ausgleichsbohrung und/oder der Schmierbohrung tiefer als die Mündung der Entlüftungskanalanordnung in den Druckraum bzw. Zylinderraum.

Insbesondere verbindet die Entlüftungskanalanordnung den Druckraum und den Behälterraum (zusätzlich zu der Ausgleichsbohrung) miteinander und zugleich auch mit der Entlüftungsöffnung. Die Entlüftungsöffnung dient insbesondere zum Entlüften eines Hydraulikkreises. Insbesondere weist die Gebereinheit neben der Entlüftungskanalanordnung keine weiteren bestimmungsgemäßen Entlüftungsoptionen auf. Die Nehmereinheit kann wenigstens eine Entlüftungsöffnung aufweisen.

Der höchste Punkt bezieht sich insbesondere auf einen Ort, an dem sich Luftblasen auftriebsbedingt im Behälterraum bzw. im Druckraum sammeln können. Der Behälterraum wird insbesondere von Wandungen und/oder von wenigstens einem Deckel und/oder von wenigstens einer Membraneinheit begrenzt. Der höchste Punkt des Behälterraums liegt insbesondere innerhalb des Raums, welcher von den Wandungen und/oder von dem Deckel und/oder von der Membraneinheit umschlossen wird. Der höchste Punkt des Behälterraums liegt insbesondere nicht außerhalb der Wandungen und/oder des Deckels und/oder der Membraneinheit. Wenn die Ausgleichsbehältereinrichtung mit einer Membraneinheit ausgestattet ist, weist die Membraneinheit insbesondere keine solchen Ausbuchtungen auf, welche den höchsten Punkt des Behälterraums zu einer anderen Stelle als zu der Mündung der Entlüftungskanalanordnung verlagern könnte.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Darstellung eines Mountainbikes mit einer anmeldungsgemäßen Bremsanordnung;
- Fig. 2: eine schematische Darstellung einer anmeldungsgemäßen Bremsanordnung an einem Lenker eines Fahrrads in einer Draufsicht;
- Fig. 3: eine schematische Detaildarstellung der Bremsanordnung in einer geschnittenen Seitenansicht; und
- Fig. 4-6: schematische Detaildarstellungen von Varianten der Bremsanordnung.

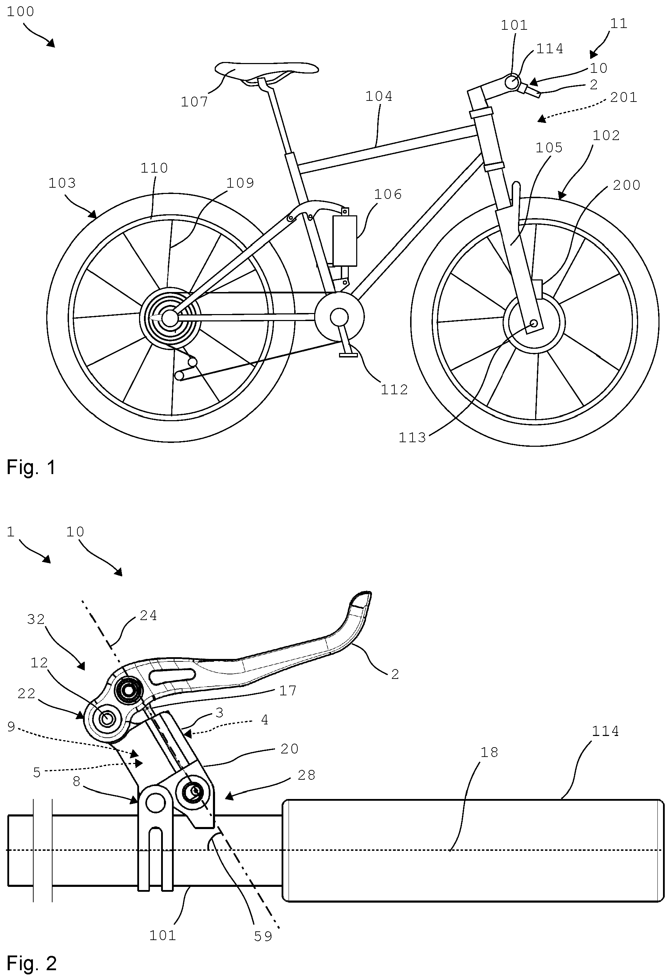

In der Figur 1 ist ein als Mountainbike ausgebildetes Fahrrad 100 dargestellt, welches mit einer anmeldungsgemäßen hydraulischen Bremsanordnung 1 ausgerüstet sind. Das Fahrrad 100 verfügt über ein Vorderrad 102 und ein Hinterrad 103, die über jeweils einen separaten Hydraulikkreis 11 einzeln gebremst werden können. Dazu umfassen die Hydraulikkreise 11 jeweils eine Gebereinheit 10 und eine Nehmereinheit 200.

Das Fahrrad 100 verfügt über einen Rahmen 104, einen Lenker 101 mit Griffen 114, einen Sattel 107, eine Gabel bzw. Federgabel 105 und bei Bedarf kann ein Hinterraddämpfer 106 vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Räder 102, 103 haben jeweils eine Felge 110, welche über Speichen 109 mit einer Nabe verbunden ist. Die Naben der Räder 102, 103 können jeweils über ein Spannsystem 113 (zum Beispiel eine Steckachse oder einen Schnellspanner) an dem Rahmen 104 bzw. der Gabel 105 befestigt sein.

An dem Rahmen 104 und an der Gabel 105 ist jeweils eine hier als hydraulische Scheibenbremse ausgebildete Nehmereinheit 200 befestigt. Die Nehmereinheit 200 ist über eine hier nicht sichtbare Leitungseinrichtung 201 mit der zugehörigen Gebereinheit 10 verbunden, sodass sich ein geschlossener Hydraulikkreis 11 ergibt. Die Gebereinheiten 10 eines Fahrrads 100 sind an gegenüberliegenden Enden des Lenkers 101 montiert und weisen jeweils einen mit den Fingern betätigbaren Bremshebel 2 auf.

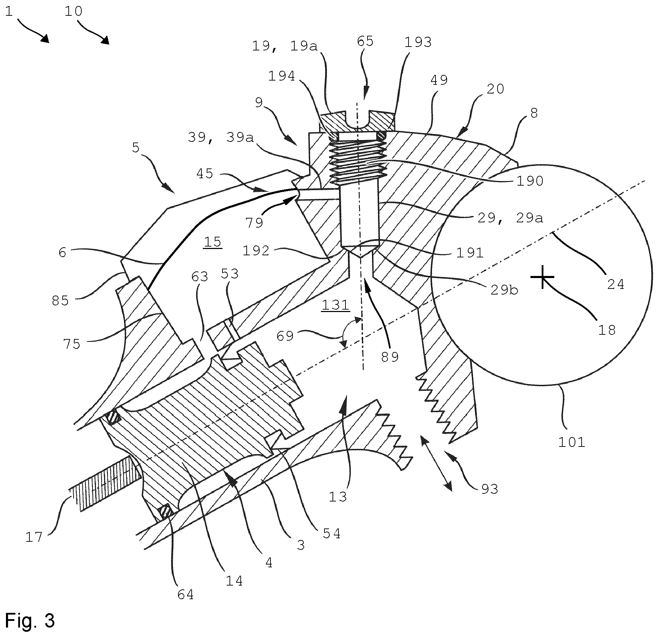

Die anmeldungsgemäße Bremsanordnung 1 wird nun mit Bezug zu den Figuren 2 und 3 näher beschrieben.

Die Gebereinheit 10 ist hier mittels einer Lenkeranbindung 8 an einem Lenker 101 eines Fahrrads 100 in einer bestimmungsgemäßen Montageposition befestigt. Die Lenkeranbindung 8 ist hier integraler Bestandteil eines Basiskörpers 20 und umgreift zusammen mit einem oder mehrerer Anbindungsabschnitte (hier zum Beispiel als eine an die Lenkeranbindung 8 anschraubbare Schelle ausgebildet) den Lenker 101. Die Lenkeranbindung 8 definiert eine Montageachse 18, welche hier auch der Längsachse des Lenkers 101 entspricht. Die Gebereinheit 10 kann um die Montageachse 18 herum gedreht werden, um den Bremshebel 2 möglichst ergonomisch auszurichten. Mittels der Lenkeranbindung 8 wird die Gebereinheit dann in dem gewünschten Drehwinkel fixiert, beispielweise durch Anziehen der Schelle. Die Lenkeranbindung 8 definiert ein lenkerseitiges Ende 28 der Gebereinheit 10.

Die Gebereinheit 10 umfasst ein Zylindergehäuse 3 mit einem Zylinderraum 13 und eine in dem Zylinderraum 13 verschiebbar aufgenommene Kolbeneinheit 4 (in der Figur 2 nicht sichtbar im Inneren). Auch das Zylindergehäuse 3 ist integraler Bestandteil des Basiskörpers 20. Das Zylindergehäuse 3 weist eine Anschlussöffnung 93 zum Koppeln einer Leitungseinrichtung 201 auf.

An einer ebenfalls im Basiskörper 20 integrierten Hebelaufnahme 22 ist ein Bremshebel 2 gelagert, sodass dieser um eine Bremshebelschwenkachse 12 verschwenkt werden kann. Der Bremshebel 2 ist mittels einer Betätigungsmechanik mit einem Pleuel 17 an die Kolbeneinheit 4 gekoppelt. Der Bremshebel 2 definiert ein hebelseitiges Ende 32 der Gebereinheit 10.

Durch ein Ziehen am Bremshebel 2 wird die Kolbeneinheit 4 im Zylinderraum 13 verschoben. Die Kolbeneinheit 4 umfasst einen Kolben 14 und eine Kolbendichtungseinrichtung, welche hier durch eine Primärdichtung 54 und eine Sekundärdichtung 64 bereitgestellt wird. Die Kolbeneinheit 4 befindet sich hier in einer Ruheposition, da die Gebereinheit 10 nicht betätigt wird.

Zur Bevorratung eines Hydraulikfluids ist eine Ausgleichsbehältereinrichtung 5 mit einem Behälterraum 15 und einem Deckel 85 vorgesehen. Als Hydraulikfluid ist hier ein biologisch abbaubares Öl vorgesehen. Alternativ können auch ein mineralisches Öl oder eine Bremsflüssigkeit (DOT) vorgesehen sein. Der Behälterraum 15 wird von einer Behälterwanne 75 und einer Membraneinheit 6 begrenzt. Die Behälterwanne 75 ist hier integraler Bestandteil des Basiskörpers 20.

Die Membraneinheit 6 erstreckt sich zwischen dem Behälterraum 15 und dem Deckel 85 und dichtet den Behälterraum 15 gegenüber einem unterhalb des Deckels 85 liegenden Luftraum 45 ab. Über eine Verformung der Membraneinheit 6 kann das Volumen des Behälterraums 15 an den jeweiligen Ölstand angepasst werden. Der Luftraum 45 wird dann entsprechend kleiner bzw. größer. Der Luftraum 45 ist über eine Belüftungsöffnung mit der Umgebung verbunden, um einen Druckausgleich zu ermöglichen.

Die Kolbeneinheit 4 und das Zylindergehäuse 3 begrenzen hier einen Druckraum 131, welcher einen Teil des Zylinderraums 13 bildet. Der Druckraum 131 ist über eine im Zylindergehäuse 3 ausgebildete Ausgleichsbohrung 53 mit dem Behälterraum 15 verbunden. Die Ausgleichsbohrung 53 besteht hier rein beispielhaft aus insgesamt drei Einzelbohrungen.

Die Ausgleichsbohrung 53 liegt frei, wenn die Kolbeneinheit 4 in der Ruheposition ist. Bei einer Betätigung der Gebereinheit 10 dichtet die Kolbeneinheit 4 mit ihrer Primärdichtung 54 den Druckraum 131 gegenüber dem Behälterraum 15 ab. Dadurch kann der Druckraum 131 mit Druck beaufschlagt werden, wenn weiter am Bremshebel 2 gezogen wird. Dann wird die Nehmereinheit 200 betätigt und beispielsweise ein Kolben einer Scheibenbremse ausgefahren.

Zusätzlich zu der Ausgleichsbohrung 53 ist der Zylinderraum 13 über eine Schmierbohrung 63 mit dem Behälterraum 15 verbunden. Dabei mündet die Schmierbohrung 63 in einen außerhalb des Druckraums 131 liegenden Teil des Zylinderraums 13. Über die Schmierbohrung 63 kann Hydraulikfluid hinter die Primärdichtung 54 gelangen, um dort die Kolbeneinheit 4 zu schmieren. Zudem kann das Hydraulikfluid über die Schmierbohrung 63 wieder zurück in den Behälterraum 15 strömen, wenn es hinter die Primärdichtung 54 gelangt ist. Die Schmierbohrung 63 wird durch die Sekundärdichtung 64 abgedichtet.

Wie in der Figur 2 gut zu erkennen, ist die Gebereinheit 10 hier in der Bauart einer sog. "Radialkolbenpumpe" ausgeführt und steht radial vom Lenker 101 ab. Die Längsachse 24 der Kolbeneinheit 4 (strichpunktiert eingezeichnet) schneidet (in einer gedachten Verlängerung) die Montageachse 18 bzw. die Längsachse des Lenkers 101 in einem Winkel 59 von z. B. 55° +/- 10°. Dadurch fällt die Gebereinheit 10 hier besonders kompakt aus.

Um (trotz der Bauart als Radialkolbenpumpe) eine besonders komfortable und zugleich zuverlässige Entlüftung zu ermöglichen, ist die Gebereinheit 10 mit einer besonderen Entlüftungskanalanordnung 9 ausgestattet (in der Figur 2 nicht sichtbar im Inneren). Die Entlüftungskanalanordnung 9 mündet an einer Entlüftungsöffnung 65 in die Umgebung und verbindet die Entlüftungsöffnung 65 sowohl mit dem Behälterraum 15 als auch mit dem Druckraum 131. Dadurch können von der Entlüftungsöffnung 65 aus sowohl der Behälterraum 15 (Niederdruckbereich) als auch der Druckraum 131 (Hochdruckbereich) zugleich bzw. gleichzeitig entlüftet werden.

Die Entlüftungskanalanordnung 9 mündet mit einer Druckraummündung 89 am höchsten Punkt des Druckraums 131 in den Druckraum 131. Zudem mündet die Entlüftungskanalanordnung 9 mit einer Behälterraummündung 79 am höchsten Punkt des Behälterraums 15 in den Behälterraum 15. Dadurch können die Luftblasen aus dem Druckraum und aus dem Behälterraum 15 in die Entlüftungskanalanordnung 9 aufsteigen und über die Entlüftungsöffnung 65 in die Umgebung entweichen. Das Aufsteigen der Luftblasen funktioniert besonders zuverlässig, wenn sich die Gebereinheit 10 in der bestimmungsgemäßen Montageposition am Lenker 101 befindet.

Eine bestimmungsgemäße Montageposition ist beispielhaft in der Figur 3 gezeigt. Dort ist gut zu erkennen, dass die Längsachse 24 der Kolbeneinheit 4 (strichpunktiert dargestellt) in einem definierten Winkel zur Horizontalen nach unten geneigt ist. Beispielsweise ist die Längsachse 24 der Kolbeneinheit 4 um 30° +/- 10° zur Horizontalen nach unten geneigt am Lenker 101 montiert. Die genaue Winkelstellung zur Montageachse 18 bzw. zum Lenker 101 ergibt sich beispielsweise dadurch, dass der ausgestreckte und den Bremshebel 2 berührende Zeigefinger einer auf dem Fahrrad 100 sitzenden Person in einer geraden Linie mit dem Unterarm verläuft. Die Längsachse 24 der Kolbeneinheit 4 entspricht hier zudem auch eine Hauptebener der Gebereinheit 10, sodass die Gebereinheit 10 auch in Bezug auf ihre Hauptebene in einem solchen Winkel zur Horizontalen nach unten geneigt am Lenker 101 montiert ist. Mit der hier gezeigten Entlüftungskanalanordnung 9 kann die Entlüftung aber auch in anderen bestimmungsgemäßen Montagepositionen zuverlässig und sicher durchgeführt werden.

Die Entlüftungskanalanordnung 9 umfasst hier zwei Kanalarme 29a, 39a. Ein erster Kanalarm 29a mündet in den Druckraum 131 und an der Entlüftungsöffnung 65 in die Umgebung. Ein zweiter Kanalarm 39a mündet in den Behälterraum 15 und in den ersten Kanalarm 29a. Der erste Kanalarm 29a ist hier als ein Hauptkanal 29 ausgebildet. Der zweite Kanalarm 39a ist hier als ein Seitenkanal 39 ausgebildet, welcher von dem Hauptkanal 29 abzweigt. Der Hauptkanal 29 und der Seitenkanal 39 haben hier einen geradlinigen Verlauf und können dadurch mittels jeweils einer Bohrung oder eines vergleichbaren Verfahrens hergestellt werden.

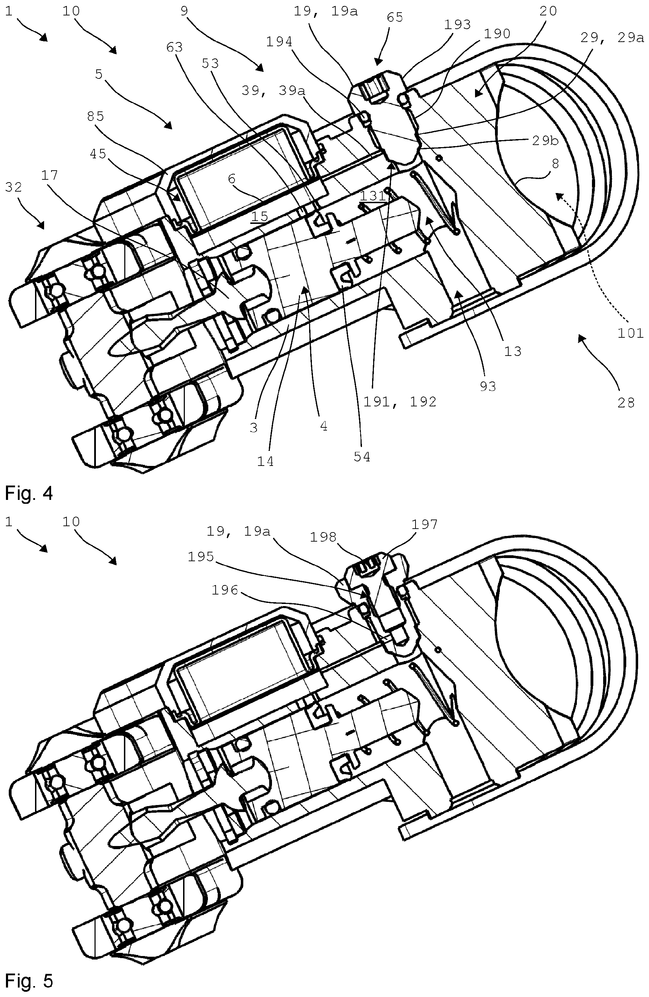

Der Hauptkanal 29 verläuft steiler als der Seitenkanal 39. Beispielsweise weist die Längsachse des Hauptkanals 29 (in der Figur 4 gestrichelt eingezeichnet) einen im Wesentlichen vertikalen Verlauf auf. Die Längsachse des Hauptkanals 29 verläuft hier beispielsweise in einem Winkel 69 von 120° +/- 15° zur Längsachse 24 der Kolbeneinheit 4. Da die Längsachse 24 der Kolbeneinheit 4 hier auch der Hauptebene der Gebereinheit 10 entspricht, verläuft die Längsachse des Hauptkanals 29 somit auch in einem solchen Winkel zur Hauptebene der Gebereinheit 10. Die Längsachse des Seitenkanals 39 weist hier einen im Wesentlichen horizontalen Verlauf auf.

Die Mündungen der Entlüftungskanalanordnung 9 in den Druckraum 131 und in den Behälterraum 15 liegen hier höher als die Ausgleichsbohrung 53 und die Schmierbohrung 63. Zudem verläuft der gesamte Seitenkanal 39 höher als der höchste Punkt des Druckraums 131. In der bestimmungsgemäßen Montageposition stellt die Entlüftungsöffnung 65 den höchsten Punkt der Entlüftungskanalanordnung 9 und auch des gesamten Hydraulikkreises 11 dar. Wie in der Figur 3 gut zu erkennen, liegt der Behälterraum 15 oberhalb des Druckraums 131, sodass auch die Ausgleichsbohrung 53 und die Schmierbohrung 63 nach oben und im Wesentlichen vertikal verlaufen.

Die Entlüftungskanalanordnung 9 verläuft zwischen der Lenkeranbindung 8 und dem Behälterraum 15 innerhalb eines Gehäusekörpers 49. Der Gehäusekörper 49 wird hier durch den Basiskörper 20 bereitgestellt, sodass auch die Entlüftungskanalanordnung 9 ein integraler Bestandteil des Basiskörpers 20 ist. Die Entlüftungskanalanordnung 9 wird beispielsweise durch Einarbeiten von Aussparungen und insbesondere Bohrungen in den Basiskörper 20 hergestellt.

Zum druckfesten Verschließen der Entlüftungskanalanordnung 9 ist ein lösbares Verschlusselement 19 vorgesehen, welche hier als eine Schraube 19a mit einem (Außen-) Gewindeabschnitt 190 ausgeführt ist. Am unteren Ende ist das Verschlusselement 19 hier mit einer konischen Dichtfläche 191 ausgestattet. Am oberen Ende ist ein Kragenabschnitt 193 vorgesehen, welcher beispielsweise dem Kopf der Schraube 19a entspricht. Die Schraube 19a weist an ihrem oberen Ende eine Aufnahme für ein Schraubwerkzeug auf. Das Verschlusselement 19 erstreckt sich hier nur im Hauptkanal 29.

Das Verschlusselement 19 kann hier so eingeschraubt werden, dass der Druckraum 131 gegenüber dem Behälterraum 15 und auch gegenüber der Entlüftungsöffnung 65 abgedichtet ist. Dazu liegt die Dichtfläche 191 an einem korrespondierenden Dichtsitz 192 des Hauptkanals 120 an. Zur Abdichtung der Entlüftungsöffnung 65 gegenüber der Entlüftungskanalanordnung 9 ist zwischen dem Kragenabschnitt 193 und dem Gehäusekörper 49 ein Dichtkörper 194 und beispielsweise ein Dichtring angeordnet. Durch ein Lösen des Verschlusselements 19 wird der Druckraum 131 mit dem Behälterraum 15 verbunden. Anschließend wird die Entlüftungsöffnung 65 geöffnet.

Der Dichtsitz 192 wird hier durch eine Querschnittsverengung 29b des Hauptkanals 29 bereitgestellt. Unterhalb der Querschnittsverengung 29b weist der Hauptkanal 29 einen Kanalquerschnitt auf, dessen Durchmesser kleiner als der Durchmesser des Kanalquerschnitts oberhalb der Querschnittsverengung 29b ist.

Der Gewindeabschnitt 190 des Verschlusselements 19 erstreckt sich hier nur zwischen dem Seitenkanal 39 und der Entlüftungsöffnung 65. Dadurch kann beim Einschrauben des Verschlusselements 19 Hydraulikfluid aus dem Hauptkanal 29 über den Seitenkanal 39 in den Behälterraum 15 entweichen. Zudem können Hydraulikfluid und Luft auch über die Ausgleichsbohrung 53 in den Behälterraum 15 entweichen. So kann die Entlüftungskanalanordnung 9 mit Hydraulikfluid aufgefüllt werden, bevor das Verschlusselement 15 eingesetzt wird. Durch das Auffüllen wird gewährleistet, dass sich keine Luft mehr in der Entlüftungskanalanordnung 9 befindet.

Bei der hier gezeigten Erfindung ist es zum Entlüften nicht mehr notwendig, dass die Gebereinheit 10 aus ihrer bestimmungsgemäßen Montageposition in eine andere, spezielle Position verschwenkt werden muss. Die Montageposition entspricht zugleich auch der Entlüftungsposition. Mit anderen Worten, bei der Erfindung kann die Gebereinheit 10 in ihrer normalen Betriebsposition am Lenker 101 vollständig und sicher entlüftet werden. Zudem ist eine sogenannte Komfortentlüftung möglich, sodass Ölverschmutzungen verhindert werden. Beispielsweise kann eine extrem schnelle Entlüftung unterwegs bzw. im Feld erfolgen, wobei lediglich das Verschlusselement 15 herausgeschraubt werden muss.

Die Figur 4 zeigt eine Variante der mit Bezug zur Figur 3 beschriebenen Bremsanordnung 1. Die Gebereinheit 10 ist hier ebenfalls mittels einer Lenkeranbindung 8 an einem nicht dargestellten Lenker 101 in einer bestimmungsgemäßen Montageposition mit dem hebelseitigen Ende 32 schräg nach unten befestigt. Die Längsachse des Hauptkanals 29 verläuft hier beispielsweise in einem Winkel 69 von 90° +/- 15° zur Längsachse 24 der Kolbeneinheit 4. Zudem verläuft der Seitenkanal 39 parallel zur Längsachse 24 der Kolbeneinheit 4. Die Ausgleichsbehältereinrichtung 5 ist hier mit einer Membraneinheit 6 ausgestattet, welche den Behälterraum 15 so nach oben hin abschließt, dass der höchste Punkt des Behälterraums 15 an der Behälterraummündung 79 liegt.

Die Figur 5 zeigt die Gebereinheit 10 der Figur 4, welche hier mit einem besonders vorteilhaften Verschlusselement 19 mit einem Sackloch 195 und einem Querkanal 196 ausgestattet ist. Das Sackloch 195 ist hier zweistufig ausgeführt, sodass sich zwei Durchmesserbereiche ergeben (wobei der größere Durchmesserbereich das Innengewinde aufweist).

Das Sackloch 195 ist mittels einer Sacklochverschlussschraube 197 gegenüber der Umgebung verschlossen. Die Sacklochverschlussschraube 197 hat einen Ansatz 198 für ein Werkzeug und z. B. einen Innensechskantschlüssel. Der Querkanal 196 ist über den Seitenkanal 39 mit dem Behälterraum 15 verbunden. Wenn der Behälterraum 15 entlüftet oder mit Hydraulikfluid befüllt werden soll, wird lediglich die Sacklochverschlussschraube 197 gelöst, während das Verschlusselement 19 weiterhin den Druckraum 131 abdichtet.

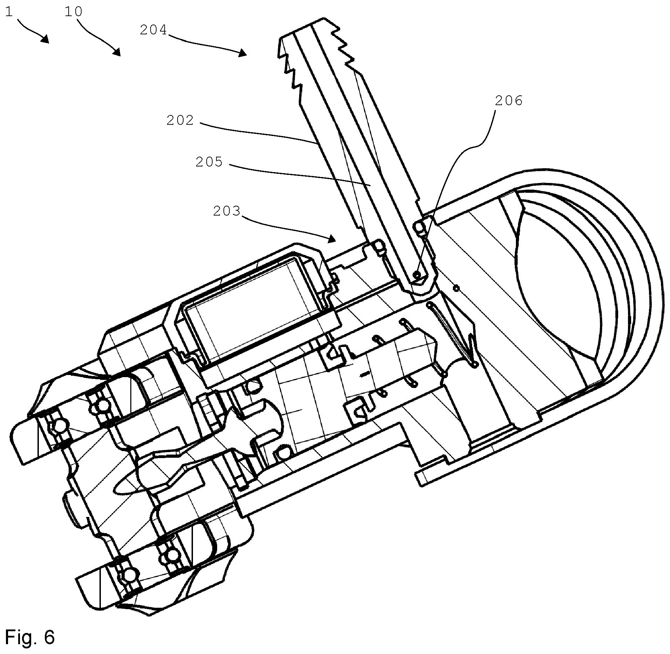

In der Figur 6 ist die Gebereinheit 10 der Figur 4 gezeigt, wobei hier das Verschlusselement 19 entfernt und zeitweise durch einen rohrartigen Befülladapter 202 mit zwei Enden 203, 204 ersetzt wurde. Wenn der Befülladapter 202 wie hier gezeigt eingeschraubt ist, dichtet das erste Ende 203 den Druckraum 131 ab. Über ein Sackloch 205 und einen radialen Füllkanal 206 kann dann der Behälterraum 15 mit Hydraulikfluid befüllt und zugleich entlüftet werden, während der Druckraum 131 verschlossen bleibt. An dem zweiten Ende 204 kann z. B. ein Schlauch angeschlossen werden.

### Bezugszeichenliste:

| | | | |
|---|---|---|---|
| 1 | Bremsanordnung | 93 | Anschlussöffnung |
| 2 | Bremshebel | 100 | Fahrrad |
| 3 | Zylindergehäuse | 101 | Lenker |
| 4 | Kolbeneinheit | 102 | Rad, Vorderrad |
| 5 | Ausgleichsbehältereinrichtung | 103 | Rad, Hinterrad |
| | | 104 | Rahmen |
| 6 | Membraneinheit | 105 | Gabel, Federgabel |
| 8 | Lenkeranbindung | 106 | Hinterraddämpfer |
| 9 | Entlüftungskanalanordnung | 107 | Sattel |
| 10 | Gebereinheit | 109 | Speiche |
| 11 | Hydraulikkreis | 110 | Felge |
| 12 | Bremshebelschwenkachse | 112 | Tretkurbel |
| 13 | Zylinderraum | 113 | Spannsystem |
| 14 | Kolben | 114 | Griff |
| 15 | Behälterraum | 131 | Druckraum |
| 17 | Pleuel | 190 | Gewindeabschnitt |
| 18 | Montageachse | 191 | Dichtfläche |
| 19 | Verschlusselement | 192 | Dichtsitz |
| 19a | Schraube | 193 | Kragenabschnitt |
| 20 | Basiskörper | 194 | Dichtkörper |
| 22 | Hebelaufnahme | 195 | Sackloch |
| 24 | Längsachse | 196 | Querkanal |
| 28 | Ende | 197 | Sacklochverschlussschraube |
| 29 | Hauptkanal | 198 | Ansatz |
| 29a | Kanalarm | 200 | Nehmereinheit |
| 29b | Querschnittsverengung | 201 | Leitungseinrichtung |
| 32 | Ende | 202 | Befülladapter |
| 39 | Seitenkanal | 203 | Ende |
| 39a | Kanalarm | 204 | Ende |
| 45 | Luftraum | 205 | Sackloch |
| 49 | Gehäusekörper | 206 | Füllkanal |
| 53 | Ausgleichsbohrung | | |
| 54 | Primärdichtung | | |
| 59 | Winkel | | |
| 63 | Schmierbohrung | | |
| 64 | Sekundärdichtung | | |
| 65 | Entlüftungsöffnung | | |
| 69 | Winkel | | |
| 75 | Behälterwanne | | |
| 79 | Behälterraummündung | | |
| 85 | Deckel | | |
| 89 | Druckraummündung | | |

## Patentansprüche

1. Hydraulische Bremsanordnung (1) für ein wenigstens teilweise muskelbetriebenes Fahrrad (100), umfassend wenigstens eine mit einer Nehmereinheit (200) fluidisch verbindbare und mittels wenigstens einer Lenkeranbindung (8) an einem Lenker (101) montierbare Gebereinheit (10), wobei die Gebereinheit (10) einen Bremshebel (2) und ein Zylindergehäuse (3) mit einem Zylinderraum (13) und eine in dem Zylinderraum (13) verschiebbar aufgenommene Kolbeneinheit (4) und wenigstens eine Ausgleichsbehältereinrichtung (5) mit einem Behälterraum (15) für ein Hydraulikfluid aufweist, wobei die Kolbeneinheit (4) und das Zylindergehäuse (3) einen Druckraum (131) begrenzen und wobei der Druckraum (131) mittels wenigstens einer Ausgleichsbohrung (53) mit dem Behälterraum (15) verbunden ist, wobei die Lenkeranbindung (8) eine Montageachse (18) definiert und wobei die Gebereinheit (10) mittels der Lenkeranbindung (8) um die Montageachse (18) herum in einem Drehwinkel montierbar ist, wobei der Bremshebel (2) an einem hebelseitigen Ende (32) der Gebereinheit (10) und die Lenkeranbindung (8) an einem lenkerseitigen Ende (28) der Gebereinheit (10) angeordnet ist, umfassend eine Entlüftungskanalanordnung (9), welche eine in die Umgebung der Gebereinheit (10) mündende Entlüftungsöffnung (65) sowohl mit einer Behälterraummündung (79) als auch mit einer Druckraummündung (89) verbindet, sodass über die Entlüftungsöffnung (65) sowohl der Behälterraum (15) als auch der Druckraum (131) zugleich entlüftet werden können,
**dadurch gekennzeichnet,**
**dass** die Entlüftungskanalanordnung (9) zwischen der Druckraummündung (89) und der Entlüftungsöffnung (65) und zwischen der Behälterraummündung (79) und der Entlüftungsöffnung (65) ansteigt, sodass Luftblasen aus dem Druckraum (131) und aus dem Behälterraum (15) zu der Entlüftungsöffnung (65) aufsteigen können, wenn die Gebereinheit (10) so um die Montageachse (18) gedreht ist, dass das hebelseitige Ende (32) nach unten zeigt und die Druckraummündung (89) im Bereich des höchsten Punktes des Druckraums (131) und die Behälterraummündung (79) im Bereich des höchsten Punktes des Behälterraums (15) liegt.

2. Bremsanordnung (1) nach dem vorhergehenden Anspruch, wobei die Luftblasen aus dem Druckraum (131) und aus dem Behälterraum (15) wenigstens dann zu der Entlüftungsöffnung (65) aufsteigen können, wenn die Gebereinheit (10) in einem Winkel zwischen 0° und 90° zur Horizontalen um die Montageachse (18) gedreht ist.

3. Bremsanordnung (1) nach einem der vorhergehenden Ansprüche, wobei die Kolbeneinheit (4) entlang einer Längsachse (24) verschiebbar im Zylinderraum (13) aufgenommenen ist und wobei sich die Kolbeneinheit (4) in Bezug auf ihre Längsachse (24) zwischen dem hebelseitigen Ende (32) und dem lenkerseitigen Ende (28) erstreckt und wobei die Kolbeneinheit (4) durch das Betätigen des Bremshebels (2) vom hebelseitigen Ende (32) in Richtung des lenkerseitigen Endes (28) verschiebbar ist.

4. Bremsanordnung (1) nach einem der vorhergehenden Ansprüche, wobei die Entlüftungskanalanordnung (9) mittels eines lösbaren Verschlusselements (19) verschließbar ist und wobei das Verschlusselement (19) so in die Entlüftungskanalanordnung (9) einbringbar ist, dass der Druckraum (131) gegenüber dem Behälterraum (15) und auch gegenüber der Entlüftungsöffnung (65) abgedichtet ist und wobei das Verschlusselement (19) insbesondere als eine Schraube (19a) ausgebildet ist.

5. Bremsanordnung (1) nach dem vorhergehenden Anspruch, wobei durch ein Lösen des Verschlusselements (19) der Druckraum (131) mit dem Behälterraum (15) verbunden wird und zudem die Entlüftungsöffnung (65) geöffnet wird.

6. Bremsanordnung (1) nach einem der vorhergehenden Ansprüche, wobei die Entlüftungskanalanordnung (9) wenigstens zwei Kanalarme (29a, 39a) umfasst, wobei wenigstens ein Kanalarm (29a) in den Druckraum (131) und wenigstens ein Kanalarm (39a) in den Behälterraum (15) mündet.

7. Bremsanordnung (1) nach einem der vorhergehenden Ansprüche, wobei die Entlüftungskanalanordnung (9) wenigstens einen Hauptkanal (29), welcher von dem Druckraum (131) zu der Entlüftungsöffnung (65) verläuft, und wenigstens einen Seitenkanal (39), welcher sich von dem Hauptkanal (29) aus zu dem Behälterraum (15) erstreckt, umfasst und wobei der Hauptkanal (29) insbesondere steiler als der Seitenkanal (39) verläuft.

8. Bremsanordnung (1) nach dem vorhergehenden Anspruch und Anspruch 4, wobei das Verschlusselement (19) an einem unteren Ende, welches dem Druckraum (131) zugewandt ist, eine insbesondere konische Dichtfläche (191) aufweist, welche mit einem Dichtsitz (192) korrespondiert, wobei der Dichtsitz (192) durch eine Querschnittsverengung (29b) im Hauptkanal (29) bereitgestellt wird und wobei das Verschlusselement (19) an einem oberen Ende, welches der Entlüftungsöffnung (65) zugewandt ist, einen Kragenabschnitt (193) aufweist, und wobei zwischen dem Kragenabschnitt (193) und einem Gehäusekörper (49), in welchem die Entlüftungskanalanordnung (9) ausgebildet ist, wenigstens ein Dichtkörper (194) angeordnet ist, um die Entlüftungskanalanordnung (9) gegenüber der Umgebung abzudichten.

9. Bremsanordnung (1) nach einem der beiden vorhergehenden Ansprüche und Anspruch 4, wobei das Verschlusselement (19) wenigstens einen Gewindeabschnitt (190) zum Einschrauben in die Entlüftungskanalanordnung (9) aufweist und wobei der Gewindeabschnitt (190) zwischen dem Seitenkanal (39) und der Entlüftungsöffnung (65) angeordnet ist und/oder nicht zwischen dem Seitenkanal (39) und dem Druckraum (131) angeordnet ist, wenn das Verschlusselement (19) in die Entlüftungskanalanordnung (9) eingeschraubt ist.

10. Bremsanordnung (1) nach einem der drei vorhergehenden Ansprüche, wobei der gesamte Seitenkanal (39) höher als ein höchster Punkt des Druckraums (131) verläuft und/oder wobei eine Mündung des Seitenkanals (39) in den Hauptkanal (29) höher als eine Mündung des Hauptkanals (29) in den Druckraum (131) angeordnet ist.

11. Bremsanordnung (1) nach einem der vier vorhergehenden Ansprüche und Anspruch 4, wobei das Verschlusselement (19) nur im Hauptkanal (29) angeordnet ist, wenn es den Druckraum (131) gegenüber dem Behälterraum (15) und auch gegenüber der Entlüftungsöffnung (65) abdichtet.

12. Bremsanordnung (1) nach einem der vorhergehenden Ansprüche, wobei der Behälterraum (15) wenigstens abschnittsweise oberhalb des Druckraums (131) angeordnet ist.

13. Bremsanordnung (1) nach einem der vorhergehenden Ansprüche, wobei die Entlüftungsöffnung (65) einen höchsten Punkt der Entlüftungskanalanordnung (9) und vorzugsweise des gesamten Hydraulikkreises (11) darstellt und insbesondere höher als ein höchster Punkt des Behälterraums (15) und/oder des Druckraums (131) angeordnet ist.

14. Bremsanordnung (1) nach einem der vorhergehenden Ansprüche, wobei die Lenkeranbindung (8) und die Kolbeneinheit (4) so zueinander angeordnet sind, dass die Kolbeneinheit (4) in Bezug auf ihre Längsachse (24) radial vom Lenker (101) absteht, wenn die Gebereinheit (10) in der bestimmungsgemäßen Montageposition an dem Lenker (101) montiert ist.

15. Fahrrad (100) mit einer hydraulischen Bremsanordnung (1) nach einem der vorhergehenden Ansprüche.

## Claims

1. A hydraulic brake arrangement (1) for an at least partially muscle-powered bicycle (100), comprising at least one master unit (10) provided for fluid connection with a slave unit (200) and for mounting to a handlebar (101) by means of at least one handlebar mount (8), wherein the master unit (10) comprises a brake lever (2) and a cylinder housing (3) with a cylinder space (13), and a piston unit (4) displaceably received in the cylinder space (13), and at least one equalizing reservoir device (5) with a tank space (15) for a hydraulic fluid, wherein the piston unit (4) and the cylinder housing (3) delimit a pressure space (131), and wherein the pressure space (131) is connected with the tank space (15) through at least one equalizing hole (53), wherein the handlebar mount (8) defines a mounting axis (18), and wherein the master unit (10) can be mounted at a rotation angle around the mounting axis (18), by means of the handlebar mount (8), wherein the brake lever (2) is disposed at the lever-side end (32) of the master unit (10), and the handlebar mount (8) is disposed at the handlebar-side end (28) of the master unit (10), comprising a vent duct arrangement (9), connecting a vent opening (65), which opens into the environment of the master unit (10), both with the tank space opening (79) and with the pressure space opening (89), so as to allow to simultaneously vent through the vent opening (65) both the tank space (15) and the pressure space (131),
**characterized in**
**that** the vent duct arrangement (9) rises between the pressure space opening (89) and the vent opening (65) and between the tank space opening (79) and the vent opening (65), so that any air bubbles can rise to the vent opening (65) out of the pressure space (131) and out of the tank space (15), when the master unit (10) is rotated around the mounting axis (18) so that the lever-side end (32) faces downwardly and the pressure space opening (89) lies in the range of the highest spot of the pressure space (131), and the tank space opening (79) lies in the region of the highest spot of the tank space (15).

2. The brake arrangement (1) according to the preceding claim, wherein the air bubbles can rise to the vent opening (65) out of the pressure space (131) and out of the tank space (15), at least when the master unit (10) is rotated around the mounting axis (18) at an angle between 0° and 90° to the horizontal.

3. The brake arrangement (1) according to any of the preceding claims, wherein the piston unit (4) is accommodated in the cylinder space (13), displaceably along a longitudinal axis (24), and wherein the piston unit (4) extends between the lever-side end (32) and the handlebar-side end (28) in respect of its longitudinal axis (24), and wherein the piston unit (4) is displaceable by operating the brake lever (2) from the lever-side end (32) in the direction toward the handlebar-side end (28).

4. The brake arrangement (1) according to any of the preceding claims, wherein the vent duct arrangement (9) is provided to be closed by means of a detachable paddle (19), and wherein the paddle (19) can be inserted in the vent duct arrangement (9), so that the pressure space (131) is sealed relative to the tank space (15) and also relative to the vent opening (65), and wherein the paddle (19) is in particular configured as a screw (19a).

5. The brake arrangement (1) according to the preceding claim, wherein releasing the paddle (19) causes the pressure space (131) to connect with the tank space (15) and also to open the vent opening (65).

6. The brake arrangement (1) according to any of the preceding claims, wherein the vent duct arrangement (9) comprises at least two duct branches (29a, 39a), wherein at least one duct branch (29a) opens into the pressure space (131) and at least one duct branch (39a), into the tank space (15).

7. The brake arrangement (1) according to any of the preceding claims, wherein the vent duct arrangement (9) comprises at least one principal duct (29) which extends from the pressure space (131) to the vent opening (65), and at least one branch duct (39), which extends from the principal duct (29) to the tank space (15), and wherein the principal duct (29) extends in particular steeper than does the branch duct (39).

8. The brake arrangement (1) according to the preceding claim and claim 4, wherein the paddle (19) comprises at its bottom end facing the pressure space (131), an in particular conical sealing surface (191) which corresponds with a seating (192), wherein the seating (192) is provided by a cross section reduction (29b) in the principal duct (29), and wherein the paddle (19) comprises at its top end facing the vent opening (65), a collar section (193), and wherein between the collar section (193) and the housing body (49) in which the vent duct arrangement (9) is configured, at least one sealing body (194) is disposed for sealing the vent duct arrangement (9) relative to the environment.

9. The brake arrangement (1) according to any of the two preceding claims and claim 4, wherein the paddle (19) comprises at least one threaded portion (190) for screwing into the vent duct arrangement (9), and wherein the threaded portion (190) is disposed between the branch duct (39) and the vent opening (65), and/or is not disposed between the branch duct (39) and the pressure space (131), when the paddle (19) is screwed into the vent duct arrangement (9).

10. The brake arrangement (1) according to any of the three preceding claims, wherein the entire branch duct (39) extends higher than the highest spot of the pressure space (131), and/or wherein the mouth of the branch duct (39) into the principal duct (29) is disposed higher than the mouth of the principal duct (29) into the pressure space (131).

11. The brake arrangement (1) according to any of the four preceding claims and claim 4, wherein the paddle (19) is disposed in the principal duct (29) only when it seals the pressure space (131) relative to the tank space (15) and also relative to the vent opening (65).

12. The brake arrangement (1) according to any of the preceding claims, wherein the tank space (15) is disposed above the pressure space (131) at least in sections.

13. The brake arrangement (1) according to any of the preceding claims, wherein the vent opening (65) represents the highest spot of the vent duct arrangement (9) and preferably of the entire hydraulic circuit (11), and is in particular disposed higher than the highest spot of the tank space (15) and/or the pressure space (131).

14. The brake arrangement (1) according to any of the preceding claims, wherein the handlebar mount (8) and the piston unit (4) are disposed relative to one another so that the piston unit (4) protrudes radially from the handlebar (101) relative to its longitudinal axis (24), when the master unit (10) is mounted to the handlebar (101) in the proper, intended mounted position.

15. A bicycle (100) with a hydraulic brake arrangement (1) according to any of the preceding claims.

## Revendications

1. Système de freinage hydraulique (1) pour une bicyclette entraînée au moins partiellement par force musculaire (100), comprenant au moins une unité d'émetteur (10) qui peut être reliée par fluide à une unité de capteur (200) et être montée sur un guidon (101) au moyen d'au moins une liaison de guidon (8), l'unité d'émetteur (10) présentant un levier de frein (2) et un boîtier de cylindre (3) doté d'une chambre de cylindre (13), et une unité de piston (4) logée de manière coulissante dans la chambre de cylindre (13) et au moins un dispositif de réservoir de compensation (5) doté d'une chambre de réservoir (15) pour un fluide hydraulique, l'unité de piston (4) et le boîtier de cylindre (3) délimitant une chambre de pression (131), et la chambre de pression (131) étant reliée à la chambre de réservoir (15) au moyen d'au moins un alésage de compensation (53), ladite liaison de guidon (8) définissant un axe de montage (18), et ladite unité d'émetteur (10) pouvant être montée au moyen de la liaison de guidon (8) autour de l'axe de montage (18) dans un angle de rotation, ledit levier de frein (2) étant agencé à une extrémité côté levier (32) de l'unité d'émetteur (10) et la liaison de guidon (8), elle, à une extrémité côté guidon (28) de l'unité d'émetteur (10), comprenant un système de canalisation de purge (9) qui relie un orifice de purge (65), débouchant dans l'environnement de l'unité de capteur (10), aussi bien à une ouverture de chambre de réservoir (79) qu'à une ouverture de chambre de pression (89) de sorte que l'orifice de purge (65) permet de purger à la fois la chambre de réservoir (15) et la chambre de pression (131),
**caractérisé en ce que**
le système de canalisation de purge (9) s'élève entre l'ouverture de la chambre de pression (89) et l'orifice de purge (65) et entre l'ouverture de la chambre de réservoir (79) et l'orifice de purge (65) de sorte que des bulles d'air peuvent s'échapper de la chambre de pression (131) et de la chambre de réservoir (15) vers le haut en direction de l'orifice de purge (65) quand l'unité d'émetteur (10) est tournée autour de l'axe de montage (18) de telle manière que l'extrémité côté levier (32) est tournée vers le bas, et l'ouverture de la chambre de pression (89) se situe au niveau du point le plus élevé de la chambre de pression (131), et l'ouverture de la chambre de réservoir (79), elle, au niveau du point le plus élevé de la chambre de réservoir (15).

2. Système de freinage (1) selon la revendication précédente, les bulles d'air s'échappant de la chambre de pression (131) et de la chambre de réservoir (15) pouvant au moins monter vers l'orifice de purge (65) quand l'unité d'émetteur (10) est tournée autour de l'axe de montage (18) dans un angle compris entre 0° et 90 ° par rapport à l'horizontale.

3. Système de freinage (1) selon l'une quelconque des revendications précédentes, l'unité de piston (4) étant logée dans la chambre de cylindre (13) de manière coulissante le long d'un axe longitudinal (24), et ladite unité de piston (4) s'étendant, par rapport à son axe longitudinal (24), entre l'extrémité côté levier (32) et l'extrémité côté guidon (28), et ladite unité de piston (4) pouvant être déplacée par coulissement, par actionnement du levier de frein (2), de l'extrémité côté levier (32) vers l'extrémité côté guidon (28).

4. Système de freinage (1) selon l'une quelconque des revendications précédentes, le système de canalisation de purge (9) pouvant être obturé au moyen d'un élément d'obturation amovible (19), et ledit élément d'obturation (19) pouvant être inséré dans le système de canalisation de purge (9) de telle manière que la chambre de pression (131) est étanche par rapport à la chambre de réservoir (15) ainsi que par rapport à l'orifice de purge (65), et ledit élément d'obturation (19) étant conçu notamment sous la forme d'une vis (19a).

5. Système de freinage (1) selon la revendication précédente, un desserrage de l'élément d'obturation (19) permettant de relier la chambre de pression (131) à la chambre de réservoir (15) et, en outre, d'ouvrir l'orifice de purge (65).

6. Système de freinage (1) selon l'une quelconque des revendications précédentes, le système de canalisation de purge (9) comprenant au moins deux bras de canalisation (29a, 39a), au moins un bras de canalisation (29a) débouchant dans la chambre de pression (131), et au moins un bras de canalisation (39a) débouchant dans la chambre de réservoir (15).

7. Système de freinage (1) selon l'une quelconque des revendications précédentes, le système de canalisation de purge (9) comprenant au moins une canalisation principale (29) allant de la chambre de pression (131) à l'orifice de purge (65), et au moins une canalisation annexe (39) allant de la canalisation principale (29) à la chambre de réservoir (15), et la canalisation principale (29) étant notamment à pente plus raide que la canalisation annexe (39).

8. Système de freinage (1) selon la revendication précédente et la revendication 4, l'élément d'obturation (19) présentant, à une extrémité inférieure tournée vers la chambre de pression (131), une surface d'étanchéité notamment conique (191) qui correspond à un siège d'étanchéité (192), ledit siège d'étanchéité (192) étant formé par un rétrécissement (29b) dans la canalisation principale (29), et l'élément d'obturation (19) présentant, à une extrémité supérieure tournée vers l'orifice de purge (65), une section formant collerette (193), et au moins un corps d'étanchéité (194) étant agencé entre la section formant collerette (193) et un corps de boîtier (49), dans lequel est conçu le système de canalisation de purge (9), afin d'assurer l'étanchéité du système de canalisation de purge (9) par rapport à l'environnement.

9. Système de freinage (1) selon l'une quelconque des deux revendications précédentes et la revendication 4, l'élément d'obturation (19) présentant au moins une section filetée (190) pour être vissé dans le système de canalisation de purge (9), et la section filetée (190) étant agencée entre la canalisation annexe (39) et l'orifice de purge (65), et/ou non pas entre la canalisation annexe (39) et la chambre de pression (131) lorsque l'élément d'obturation (19) est vissé dans le système de canalisation de purge (9).

10. Système de freinage (1) selon l'une quelconque des trois revendications précédentes, la totalité de la canalisation annexe (39) se trouvant au-dessus d'un point le plus élevé de la chambre de pression (131), et/ou une ouverture de la canalisation annexe (39) débouchant dans la canalisation principale (29) étant agencée au-dessus d'une ouverture de la canalisation principale (29) débouchant dans la chambre de pression (131).

11. Système de freinage (1) selon l'une quelconque des quatre revendications précédentes et la revendication 4, l'élément d'obturation (19) étant agencé uniquement dans la canalisation principale (29) lorsqu'il assure l'étanchéité de la chambre de pression (131) par rapport à la chambre de réservoir (15) ainsi que par rapport à l'orifice de purge (65).

12. Système de freinage (1) selon l'une quelconque des revendications précédentes, la chambre de réservoir (15) étant agencée au moins partiellement au-dessus de la chambre de pression (131).

13. Système de freinage (1) selon l'une quelconque des revendications précédentes, l'orifice de purge (65) représentant un point le plus élevé du système de canalisation de purge (9) et, de préférence, de la totalité du circuit hydraulique (11), et étant agencé notamment plus haut qu'un point le plus élevé de la chambre de réservoir (15) et/ou de la chambre de pression (131).

14. Système de freinage (1) selon l'une quelconque des revendications précédentes, la liaison de guidon (8) et l'unité de piston (4) étant agencées l'une par rapport à l'autre de telle manière que l'unité de piston (4) dépasse radialement, par rapport à son axe longitudinal (24), du guidon (101) lorsque l'unité d'émetteur (10) est montée au guidon (101) dans la position de montage prévue à cet effet.

15. Bicyclette (100) pourvue d'un système de freinage (1) selon l'une quelconque des revendications précédentes.
